# EUROPEAN PATENT APPLICATION

(11) **EP 4 130 133 A1**
(43) Date of publication of application: **08.02.2023**
(21) Application number: 21726225.2
(22) Date of filing: 01.04.2021
(51) Int. Cl.: C08K 7/02, C08L 101/16

(54) **COMPOSITE SUBSTANCES WITH PLANT BYPRODUCTS, USES AND METHODS FOR PRODUCING COMPOSITE SUBSTANCES**

(30) Priority: 01.04.2020 PT 2020116218
(71) Applicant: Novadelta-Comércio e Industria de Cafés, Lda., 1950-041 Lisboa (PT)
(72) Inventor: NABEIRO, Rui Miguel, 7370-112 Campo Maior (PT); FIGUEIRA BARROS DOS REIS, Claudia, 1495-130 LISBOA (PT); RODRIGUES, Carla, 2580-551 Alenquer (PT)
(74) Representative: Ferreira Pinto, Francisca
(86) International application number: PCT/PT2021/050009
(87) International publication number: WO 2021/201708

(57) **Abstract**

The present invention discloses composite substances that can be used in the production of objects and building materials by means of fusion thereof, and provide particular physical properties, including barrier to the transmission of ultraviolet radiation and to the transfer of liquids and gases, whereby said composite substances present thermoplastic matrixes that include synthetic polymers and/or bio-polymers, as well as further vegetal fibre associated with at least one sub-product from the processing of an edible vegetal substance, thereby providing a new economic utilization of such sub-products, and composite substances with a high degree of bio-degradation once of the disposal thereof.

The present invention further discloses uses of said composite substances and processes for production of said composite substances.

## Description

### Field of the invention

The present invention refers to the field of composite substances presenting a composition that includes a non-synthetic substance, in general, as well as to uses and production processes of composite substances.

### Background of the invention

Considering the environmental cost associated with most of the plastic materials, there is today a growing need of providing new materials for packages and other types of uses, that can replace said plastic materials.

The distribution of edible substances, in particular of edible substances with sensitive organoleptic properties, such as for example roasted and ground coffee beans, requires using confinement in materials providing an interior atmosphere that is controlled and sealed relative to the exterior environment. In particular, such confinements are provided in materials that must at least provide barrier to the transfer of water vapour and oxygen during previously defined periods of time, usually designated as shelve-life, and that can be of several months. Presently, because of the need to fulfil such requirements, the materials most often used for this purpose are synthetic materials, including both plastics and metals that present relatively high economic and environmental costs.

Coffee is a popular beverage around the world, being prepared in several ways according to local tradition and costumes. One of those ways is the so-called espresso coffee, whose consumption habits have been very significantly increased and globalized in the previous years. One of the motives that certainly sustains such popularity is the possibility of preparing espresso coffee in a practical and economic manner, in simple and relatively inexpensive machines, of the appliance category, notably in coffee machines that operate with single portion disposable capsules. Despite the fact that some alternatives to such coffee capsules that are less harmful to the environment are starting to arrive to the market, the impact of coffee capsules is a serious environmental problem, that is worsened by the big market growth of this type of packages.

The coffee silverscreen is a sub-product of the roasting process of green coffee beans, generally corresponding to the part that separates from the coffee beans after roasting thereof. The coffee silverscreen is generated in significant quantities and is currently considered as a non-valorised sub-product, frequently disposed of without considering its potential for other applications.

The prior art includes several documents relating to composite substances presenting a composition that includes synthetic polymers, notably in a thermoplastic matrix, and bio-polymers.

The document EP 2218653 A1 discloses a biologically decomposable package that includes a shell, a layer of fibre and a closing membrane that are in each case constituted by a biologically decomposable material.

The document WO 03/000810 A1 discloses and enhanced composition of impregnation and coating based upon emulsions of polymers and latex of vegetal origin such as shell and other ashes, including ashes of coffee shell in the proportion of 10 to 500 of the weight of composite.

The document WO 2012/077066 A1 discloses a capsule for preparing a liquid product comprising a base wall that presents a structure in layers with at least one layer made from a first compostable material and at least one layer made from a second compostable material that does not suffer noticeable softening and/or melting at a temperature of 70°C - 120 °C. In particular, said first compostable material is selected from the group that includes polymers derived from biomasses, synthetic polymers, polymers produced by microorganisms or genetically modified bacteria, polymers from fossil monomers, and mixtures of said polymers with or without additives. Said second compostable material is selected from paper, such as cellulose paper, preferentially 100% of cellulose paper, cardboard, paper cellophane and cellulose acetate in particular, the layer of said first material is disposed internally with relation to the layer of said second material. The disclosed capsule can be integrally constituted by compostable material. This document describes definitions of "compostable" and of "bio-degradation", which are herewith also adopted in the scope of the present disclosure.

The document US 2012/0097602 A1 discloses a capsule of similar type, whereby the filter component presents a mixture of 0 to 600 of cellulose fibres and of about 40 to 100 of fibres of compostable polyester.

The document WO 2015/162632 A1 discloses a capsule of similar type that comprises a biodegradable and compostable polymer material, or a mixture of said materials, and a percentage of filling agents, whereby the polymer materials include agro-polymers and bio-polyesters.

The document WO 2015/162632 A1 discloses a compound with a thermoplastic polymer and a filling medium for producing food packages, in particular coffee capsules, and that also includes polysaccharides derived from agro-polymers. Said capsule presents a single layer that is made from a material comprising a biodegradable and compostable polymer, with a percentage of filling media between 15% and 80% of at least one aliphatic polyester aliphatic-aromatic containing from 15% to 90% of one or more filling media with a granulometry D50.

The document FR 3035085 also discloses a capsule produced from a compound including agro-polymers from a particular list of possible origins of such agro-polymers.

None of the documents in the prior art discloses a composite substance presenting a composition that includes bio-polymers adapted to a thermoplastic matrix, including natural fibres derived from sub-products of edible vegetal species, in particular aromatic, such as for example coffee silverscreen, and that provides good dimensional and functional properties in view of different types of uses.

### General description of the invention

The objective of the present invention is to provide composite substances presenting the greatest possible fraction of material natural fibres of vegetal origin otherwise not used to date, instead of plastic materials, thereby replacing at least part of the mass of said composite substance with a currently unused source of biodegradable material, said composite substances being adapted so that can be used as industrial materials, that can be used for industrial production and providing good physical properties, including mechanical and optical, advantageous in terms of several uses and with reduction of costs.

This objective is solved according to the present invention by means of composite substances according to claim 1, whereby preferred embodiments are disclosed in the dependent claims.

In particular, the composite substances according to the present invention present a composition that includes sub-products of edible vegetal species, in particular natural fibres associated with sub-products resulting from a previous agro-industrial process, including thermal and/or mechanical, of such vegetal species, said composite substances being adapted so that present physical properties similar to those of synthetic polymers and/or bio-synthetic, thereby replacing at least part, preferentially at least most part of the mass of said composite substance with a presently unused material source.

The composite substances according to the present invention can present a composition that includes at least one of synthetic polymers and bio-polymers, as well as further natural fibres of material sub-products resulting from processing vegetal species.

The composite substances according to the present invention can present a thermoplastic matrix that includes at least one of: synthetic polymers and bio-polymers, and is reinforced with natural fibres from vegetal sub-products.

It has been demonstrated as advantageous when the composite substances present a composition that includes natural fibres of material sub-products resulting from processing of aromatic vegetal species, given that the latter can provide a better contribute for maintaining the organoleptic profiles associated with the perishable substances to be collected in objects produced with said composite substances.

The material sub-products from the processing of aromatic vegetal species include, for example, sub-products of green coffee beans, locust bean, rice and cinnamon.

The composite substances according to the present invention can include a sub-product of processing associated with the processing of the edible substance that should be protected.

The coffee silverscreen is a sub-product from processing coffee, in particular resulting from roasting of green coffee beans.

It has been demonstrated as particularly advantageous when the composite substances according to the present invention include natural fibres of coffee silverscreen, resulting from the process of roasting of coffee beans, thereby reducing the mass fraction of synthetic polymers and/or bio-polymers.

In particular, the composite substances according to the present invention include fibre of coffee silverscreen in its composition.

Said composite substance can be devoid of PLA.

An inherent objective of the present invention is to provide uses of composite substances including sub-products of vegetal species, in particular natural fibres associated with sub-products from agro-industrial processing of edible vegetal species

This objective is solved according to the present invention by means of a use according to claim 12.

An inherent objective is to provide a new use of a material associated with the processing of coffee beans, in particular of the coffee silverscreen, thereby providing an economic valorisation thereof and minimizing the sub-products usually resulting from processing green coffee beans and eliminated, non used or economically valued.

Composite substances according to the present invention can be used for the production of building materials, such as for filling or coating, and of objects associated with the distribution and consumption of edible or pharmacological substances, such as for collection of perishable substances, in general, and substances with degradable organoleptic profiles by exposure to ambient water vapour and oxygen, such as roast and ground coffee beans, tea and other aromatic substances, and presenting a composition of the family of the bio-polymers.

Another inherent objective is to provide a package of food products, in particular coffee packages, such as for example capsule and pods for roast and ground coffee beans, with physic-chemical properties similar to those of coffee.

The composite substances according to the present invention can be used for production of articles of the type flexible films, semi-flexible packages, such as for example pods for containing aromatic substances such as for example cinnamon sticks, and rigid packages, such as for example capsules for roasted and ground coffee beans, and other aromatic edible substances, and open recipients, such as for examples cups, glasses, as well as other articles, such as for example utensils used in the preparation of food, such as for example spoons and similar.

The composite substance according to the present invention can be further used for production of articles by means of injection, in analogous manner to that of other polymers.

Another objective of the present invention is to provide a process for producing composite substances including at least one of synthetic polymers and bio-polymers in its composition, and including a sub-product resulting from a previous processing of edible vegetal species, such as for example from the coffee silverscreen resulting from roasting of coffee beans.

This objective is solved according to the present invention by means of a process according to claim 17.

In the scope of the present invention, "sub-product of edible vegetal specie" is to be understood as any material or substance that results from a processing, for example mechanical, thermal or other, of a vegetal species, whereby said "sub-product", material or substance, that is not directly used or usable as a food product. The definition of "sub-product" can be further understood by reference to a process that generates a "product of edible vegetal species", in the meaning of an edible substance that directly results as greater mass fraction from a processing of an edible vegetal specie from which also results at least one "sub-product", with smaller mass fraction. In this sense, "sub-product" is a smaller mass fraction that results from a process of manipulation or transformation of an edible vegetal species, as raw material, in an edible product that is ready to be used or consumed.

### Description of the Figures

The invention shall be hereinafter explained in greater detail based upon preferred embodiments and the attached Figures.

### The Figures show:

- Figure 1:: graphic of viscosity of a first embodiment of a composite substance according to the present invention;
- Figure 2:: graphic of viscosity of a second embodiment of a composite substance according to the present invention;
- Figure 3:: graphic of thermal behaviour of coffee silverscreen, obtained after roasting of coffee beans;
- Figure 4:: graphic comparing the first and second embodiments according to the present invention;
- Figure 5:: graphic of spectrometry comparing the first and second embodiments according to the present invention;
- Figure 6:: SEM-captured image from a sample of first embodiment according to the present invention, in a first zooming scale;
- Figure 7:: SEM-captured image from a sample of first embodiment according to the present invention, in a second zooming scale;
- Figure 8:: SEM-captured image from a sample of first embodiment according to the present invention, in a third zooming scale.

### Description of embodiments of the invention

According to a first aspect, the present invention discloses composite substances that present in their composition natural fibres resulting from the processing of vegetal species, i.e., material sub-products form mechanical and/or thermal processing thereof.

According to another aspect, the composite substances present natural fibres of sub-products resulting from the processing of vegetal species, as well as further at least one of: synthetic polymers and bio-polymers of vegetal origin.

It is herewith provided a valorisation of sub-products from agro-industrial processes, or other, as well as a reduction of the consumption of polymers of relatively higher economic and/or environmental costs.

In particular, the composite substances according to the present invention present properties appropriate for several uses including for use in the production of objects by means of injection in moulds, or by means of tri-dimensional printing.

In particular, the composite substances are adapted to provide protection relative to light, water vapour, to oxygen, to microbial contaminants, to chemical contaminants.

The composite substances disclosed by the present invention are therefore appropriate for the production of collecting objects, in particular of the type packages or parts thereof, that provide protection of perishable substances along a so-called shelve-life or commercial life period, i.e. presenting degradation of its physic-chemical properties, when exposed to ambient water vapour and oxygen.

Said perishable substances can be edible substances, in general, requiring a substantial protection of water vapour barrier, and can further be edible substances with aromatic profile, in particular furthermore requiring a protection of oxygen barrier.

Said aromatic edible substances can be precursor substances of aromatic beverages, such as for example roast and ground coffee beans, soluble coffee, tea, chocolate, lyophilized foods and other similar substances.

One example of the use of composite substances disclosed by the present invention is the case of packages of the type capsules, pods and similar, and with a semi-rigid, rigid or film-like dimensional form.

The composite substances disclosed by the present invention can be used in the mould injection of objects, in similar manner to the mould injection of composite substances including synthetic polymers and/or bio-polymers.

The present invention shall be hereinafter described based upon embodiments associated with the use of a particular sub-product resulting from the processing of green coffee beans by roasting: the coffee silverscreen.

In this sense, there are described examples of completely or substantially biodegradable composite materials, reinforced with coffee silverscreen resulting from the roasting processing of coffee beans.

In particular, two mixtures of BioPBS with coffee silverscreen have been tested.

In the case of a first embodiment of the composite substance according to the present invention, a thermoplastic matrix including bio-polymer (BioPBS) with coffee silverscreen present in a mass fraction of 10,7% has been tested.

In the case of a second embodiment of the composite substance, a thermoplastic matrix has been tested that has a mass fraction 10,7% of fibre of coffee silverscreen, but that further includes the addition of a compatibilizing polymer to increase the interfacial adhesion between the PBS and the fibres of coffee silverscreen. The selected polymer was EVA-co-MA (Fusabond C 190) because contains the required functional group (maleic anhydride) grafted in the main structure of the EVA (ethylene vinyl acetate) and because presents a fusion temperature (71 °C) that is appropriate to the process. The EVA-co-MA has been added in a mass fraction of 14,9%. Experimentally, is has been established that the BioPBS and the EVA-co-MA were indeed mixable, which reinforced the justification for using this additive. The main disadvantage of this polymer is being of non-biodegradable petrochemical origin.

The mixtures of BioPBS with coffee silverscreen have been made at a 140 °C, so as to apply temperatures reasonably higher than the fusion temperature of the PBS (115 °C) and testing conditions that are closer to those used in the industry.

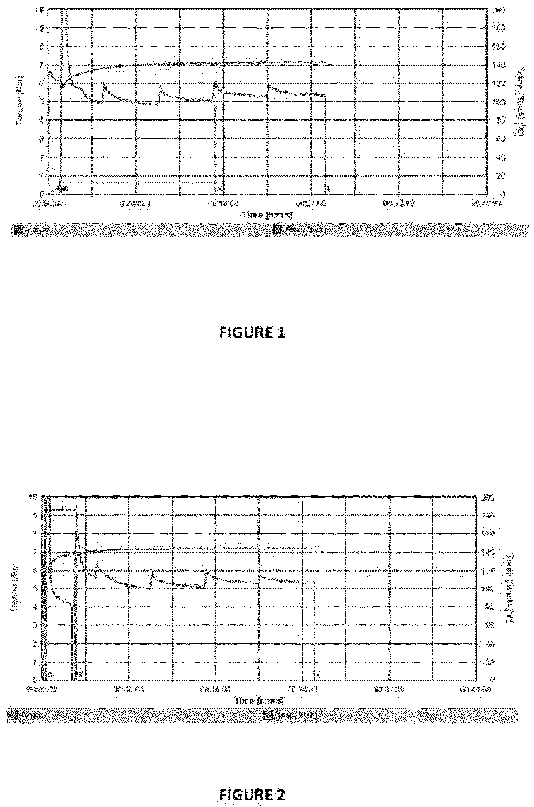

In both cases, the viscosity of the mixtures has kept stable for successive additions of constant fractions of coffee silverscreen, at a temperature of 140 °C. the viscosity of the first embodiment (see **Figure 1****)** is inferior to the viscosity of the second embodiment (see **Figure 2****),** for the same concentration of fibres of coffee silverscreen, because the EVA-co-MA additive has a relatively low fluidity index.

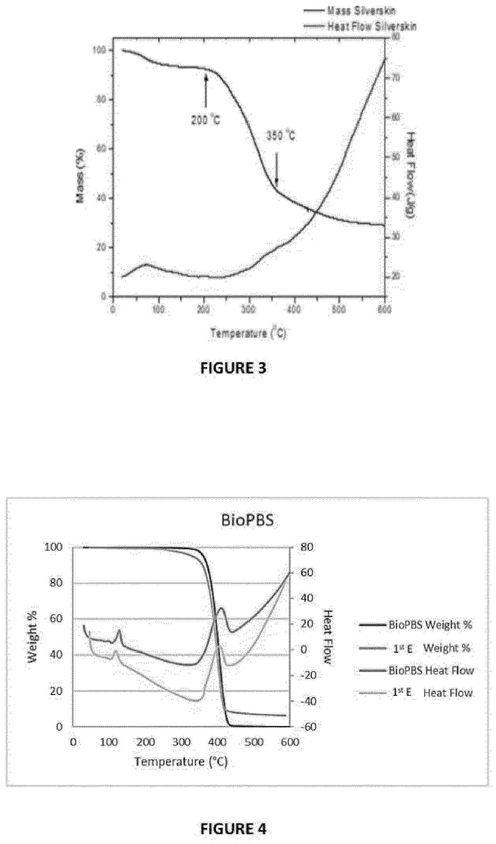

The thermal behaviour of the coffee silverscreen, resulting from the roasting process of coffee beans da, is represented in **Figure 3****.** The coffee silverscreen in this case contains 10% in weight of water and its thermal degradation occurs at about 200 - 400 °C. The residue at 600 °C corresponds to 30% in weight. The test has been carried out under inert atmosphere.

The results of the characterization of the thermal behaviour compare the BioPBS polymer with the first embodiment (see **Figure 4****).** The polymer alone, BioPBS, presents a degradation profile in a single step (340-440 °C) and the residue at 600 °C is negligible.

The first embodiment of composite including fibre of coffee silverscreen has the fusion peak at 122 °C. The results also show that a fraction of about 10% in mass of ECO 10 starts degrading at temperatures superior to 200 °C (220-360 °C), whereby the remaining 90% (m/m) are degraded up to 420 °C. At 600 °C, the sample consists in a carboniferous residue that corresponds to about 7% (m/m) of the initial sample. The mass low of 10% corresponds to the mass content in fibres.

This embodiment of composite substance can thus present a fluidity index of at least 1,5 g/ 10 min at 190°C, preferentially of at least 3,0 g/ 10 min at 190 °C.

Moreover, it has been shown as particularly advantageous the fact that these composite substances according to the present invention present a fusion temperature smaller than 200 °C, preferentially smaller than 170 °C, particularly preferentially smaller than 150 °C.

Moreover, in particular in what refers to the use of these substances for production of confinements, or other type of objects, by means of injection in mould or coating applications of other materials, the composite substances according to the present invention can present the following intervals of characteristic operational parameters:
- injection pressure between 30 and 150 bar, preferentially between 50 and 100 bar,
- compaction pressure between 5 and 30 bar, preferentially between 10 and 20 bar.

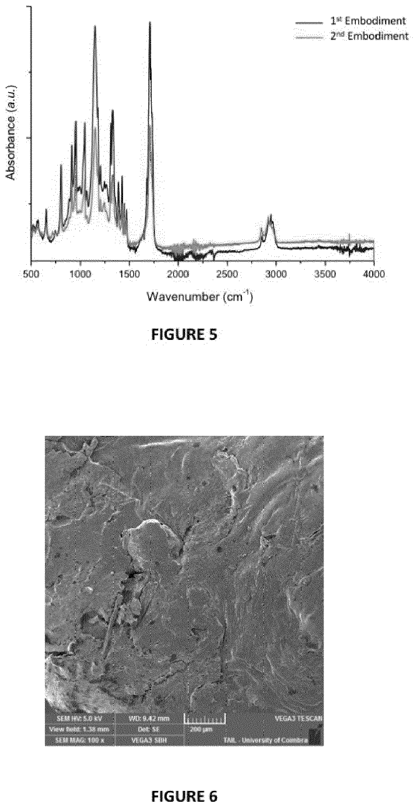

The spectrometry by means of FTIR ("Fourier-transform Infrared spectroscopy") of two composite material relating to the first and second embodiments is represented in Figure 5. As can be observed, it is not possible to distinguish the contribution of the compatibilizing agent, in this case the EVA-co-MA, in the spectrum of the second embodiment (referred as "2nd Embodiment").

The macroscopic aspect of the composite materials, at the exit of the mixer, is very homogeneous. The resistance to manual fracture, tested in empirical manner, is high for the thickness and forces applied. The compatibilizing agent should increase the adhesion between the fibres and the matrix, increasing the mechanical resistance of the composite and decreasing the permeability of the material by fluids, that is, the barrier to the fluid transmission, including to gases (oxygen, water vapour).

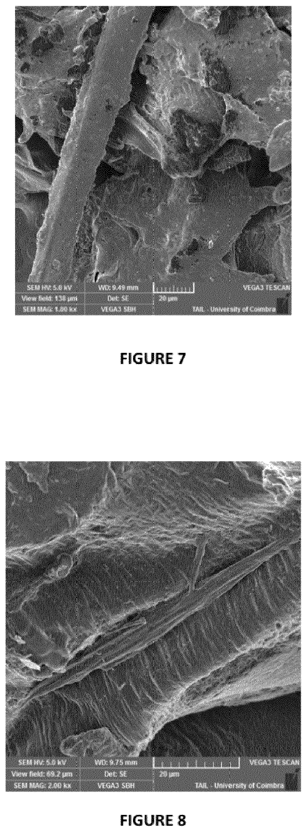

The microstructure of the composites associated with the first embodiment corresponds to a material whereby it is easier to observe the matrix than the fibres (see **Figures 6** to **8****).** As can be observed in the images obtained by SEM ("Scanning Electron Microscopy") the matrix has edges, and should correspond to relatively fragile polymer. The characteristic morphology of the fibre of coffee silverscreen is evidenced in some images that identify the fibres, or the impressions left when separating the fragments for observation.

The composite substance according to the present invention can include synthetic polymer and fibre of coffee silverscreen so that presents a water vapour transfer rate (WVTR) of less than 20 g/m².day, preferentially of less than 10 g/m².day, particularly preferentially of less than 5 g/m².day, at ambient conditions of 38 °C, 90% RH for film of 1 millimetre.

The composite substance according to present invention can include synthetic polymer and fibre of coffee silverscreen and present an oxygen transfer rate (OTR) of less than 500 cm³/m².day, preferentially of less than 250 cm³/m².day, particularly preferentially of less than 150 cm³/m².day, at ambient conditions of 38 °C, 90% RH for film of 1 millimetre, thereby providing barrier to water vapour and oxygen transfer. These properties are relevant for the production of recipients of collection of perishable substances that degrade as a result of exposure to ambient atmosphere.

The composite substance according to the present invention can include synthetic polymer and fibre of coffee silverscreen so that presents a negligible light transmission.

The thermoplastic matrix of the composite substances according to the present invention can, therefore, present physical characteristics, including properties of barrier to the transmission of ultraviolet radiation and to the transfer of fluids, in the same order of magnitude, at most with only one order of magnitude of difference, as the corresponding specific values of the polymers present in the composition thereof.

The scope of the present invention is naturally not limited by the examples above.

As shall be promptly understood by the reader, it is further possible to use fibres of other sub-products of processing of vegetal species, such as for example: locust bean husk, cinnamon husk and rice husk.

Moreover, these substances can be combined not only with polymers of vegetal origin, but also as polymers of synthetic and fossil origin.

## Claims

1. Composite substance including polymers,
**characterized**
**in that** said composite substance presents a thermoplastic matrix that includes natural fibres from sub-products of processing of vegetal species, and that presents a fusion point of less than 200 °C.

2. Composite substance according to claim 1,
**characterized**
**in that** said composite substance presents a thermoplastic matrix that includes at least one of:
- synthetic polymers, and
- biopolymers, in particular polymers of vegetal origin, whereby the thermoplastic matrix is reinforced with natural fibres of sub-products of processing of vegetal species, preferentially including at least natural fibres of coffee silverscreen obtained from processing green coffee beans, in particular from roasting of green coffee beans,
whereby the thermoplastic matrix preferentially presents physical characteristics, including properties of barrier to ultraviolet radiation transmission and to fluid transfer in the same order of magnitude, at most only with one order of magnitude of difference, as the corresponding values that are specific of the polymers present in the composition thereof.

3. Composite substance according to claims 1 or 2, **characterized in that** said composite substance presents a composition that includes natural fibres of sub-products resulting from at least one of: mechanical and thermal processing of vegetal species, preferentially aromatic vegetal species, whereby it is preferred when said composite substance includes at least one from the list of natural fibres associated with a sub-product of at least one of:
- processing of green coffee beans, such as fibre of coffee silverscreen;
- processing of cinnamon, such as fibre of cinnamon husk;
- processing of locust bean, such as fibre of locust bean husk;
- processing of rice, such as fibre of rice husk;
whereby the composite substance presents values of parameters of barrier to ultraviolet radiation transmission and to fluid transfer that are preferentially in the same order of, at most only with one order of magnitude of difference, as the corresponding values that are specific of the polymers present in the composition thereof.

4. Composite substance according to any of claims 1 to 3, **characterized**
**in that** said composite substance presents a thermoplastic matrix that includes natural fibres of vegetal sub-products, and at least one of the following synthetic polymers:
- a polyethylene from the list that includes high density polyethylenes and low density polyethylenes (LDPE),
- poly-glycolide (PGA);
- polycaprolactone (PCL);
- poly u-valerolactone (PVL);
- thermoplastic amide (TPS);
- ethylene copolymer and vinyl alcohol (EVOH);
- polyvinylidene chloride (PVDC),
whereby it is preferred when the bio-polymeric matrix does not include poly-lactic acid (PLA).

5. Composite substance according to any of claims 1 to 4, **characterized**
**in that** said composite substance presents a bio-polymeric matrix that includes natural fibres of vegetal sub-products, preferentially including at least fibre of coffee silverscreen, and further at least one of:
- BioPBS (poly-butylene succinate);
- poly-lactic acid (PLA);
whereby it is preferred when the bio-polymeric matrix does not include poly-lactic acid (PLA) PLA.

6. Composite substance according to any of claims 1 to 5, **characterized**
**in that** said composite substance presents a mass ratio of fibre of coffee silverscreen bigger than 10%, preferentially bigger than 20%, whereby it is preferred when, in the case of including synthetic polymers, the mass ratio of fibre of coffee silverscreen is comprised between 10% and 60%, preferentially between 10% and 40%, and in the case of including bio-polymers, the mass ratio of fibre of coffee silverscreen is comprised between 10% and 60%, preferentially between 20% and 40%.

7. Composite substance according to any of claims 1 to 6, **characterized**
**in that** said composite substance presents a mass ratio of bio-polymers of at least 40%, preferentially of at least 60%, whereby the mass ratio of bio-polymers can be comprised between 40 and 90%, preferentially between 50 and 80%.

8. Composite substance according to any of claims 1 to 7, **characterized**
**in that** said composite substance includes a compatibilizing agent, whereby the compatibilizing agent is preferentially a synthetic polymer, for example polyethylene, grafted with maleic anhydride (PE-co-MA), or a bio-polymer, for example BioBPS, grafted with maleic anhydride.

9. Composite substance according to any of claims 1 to 8, **characterized**
**in that** said composite substance presents a mass ratio of compatibilizing agents of at most 30%, preferentially at most 20%, whereby the mass ratio of compatibilizing agents can be comprised between 5 and 30%, preferentially between 7 and 20%.

10. Composite substance according to any of claims 1 to 9, **characterized**
**in that** said composite substance that includes synthetic polymer and fibre of coffee silverscreen presents a water vapour transfer rate (WVTR) of less than 20 g/m².day, preferentially less than 10 g/m².day, particularly preferentially less than 5 g/m².day, at ambient conditions of 38 °C, 90% RH for film of 1 millimetre, and
**in that** said composite substance that includes synthetic polymer and fibre of coffee silverscreen presents and oxygen transfer rate (OTR) of less than 500 cm³/m².day, preferentially less than 250 cm³/m².day, particularly preferentially less than 150 cm³/m².day, at ambient conditions of 38 °C, 90% RH for film of 1 millimetre, and
**in that** said composite substance that includes synthetic polymer and fibre of coffee silverscreen presents a light transmission of less than 20%, preferentially of less than 10%.

11. Composite substance according to any of claims 1 to 10, **characterized**
**in that** said composite substance presents at least one of:
- a density of less than 1,3 kg/m³, preferentially less than 1,1 kg/m³;
- a fluidity index of at least 1,5 g/ 10 min, at 190°C, preferentially of at least 3,0 g/ 10 min, at 190 °C,
- a fusion temperature of less than 200 °C, preferentially less than 170 °C, particularly preferentially less than 150 °C.

12. **Use** of a composite substance,
**characterized**
**in that** includes the use of material sub-products from the processing of vegetal species for production of said composite substance, and the use thereof for production of building materials, such as for filling or coating, and of objects associated with the distribution and consumption of edible or pharmacological substances, such as for the collection of perishable substances, such as edible substances.

13. Use according to claim 12, **characterized in that** includes the utilization of a sub-product from the processing of coffee beans, including the utilization of coffee silverscreen resulting from drying and roasting of green coffee beans, for producing composite substances, in particular a composite substance according to any one of previous claims 1 to 11.

14. Use according to claims 12 or 13, **characterized in that** includes the use of the composite substance for production of objects by means of mould injection, by means of tri-dimensional printing, or for coating of objects by means of material printing or deposition.

15. Use according to claims 12 to 14, **characterized in that** includes the use of the composite substance for production of objects or coatings of rigid, semi-rigid or flexible objects.

16. Use according to claims 12 to 15, **characterized in that** includes the use of the composite substance for production of packages of edible substances requiring barrier at least to the transfer of fluids, including with a stable bi-dimensional structure, for example in the form of a capsule for collecting an individual portion of roasted and ground coffee beans, tea and other aromatic edible substances, or with a flexible dimensional structure, such as for example in the form of film.

17. **Process** for producing a composite substance, in particular a composite substance according to any one of claims 1 to 11, said process including the following steps:
- providing a first quantity of at least one of:
- synthetic polymers, and
- bio-polymers;
- providing a first quantity of natural fibres associated with a sub-product of a previous processing of a vegetal species, including at least one natural fibre from the list that includes coffee silverscreen, cinnamon husk, and other aromatic vegetal substances;
- providing a bio-composite mixture of said first quantities of natural fibres with remaining polymers, in particular according to a previously defined mass fraction;
- melting a quantity of the bio-composite mixture at a temperature lower than 200 °C, preferentially lower than 150 °C;
- providing the fusion of bio-composite mixture to a following step of process.

18. Process according to claim 17, **characterized in that** the total quantity of natural fibres associated with a sub-product from the processing of a vegetal species, is of at least 10%, preferentially of at least 20% in mass fraction of the bio-composite mixture, whereby it is preferred when the remaining mass fraction of the bio-composite mixture is provided at least in its most part by bio-composites.

19. Process according to claim 17 or 18, **characterized in that** further includes the following steps:
- providing a previously configured mould of object relating to an object for collection of edible substance, such as for example a container part of a capsule for collection of edible substance or the aromatic type;
- injecting the fusion of bio-composite mixture in the mould of object.
